# EUROPEAN PATENT APPLICATION

(11) **EP 4 123 477 A1**
(43) Date of publication of application: **25.01.2023**
(21) Application number: 22190085.5
(22) Date of filing: 12.08.2022
(51) Int. Cl.: G06F 16/435

(54) **RECOMMENDING MULTIMEDIA INFORMATION**

(30) Priority: 13.08.2021 CN 202110932362
(71) Applicant: Apollo Intelligent Connectivity (Beijing) Technology Co., Ltd., Beijing 100176 (CN)
(72) Inventor: CHEN, Zhen, BEIJING, 100176 (CN)
(74) Representative: Laqua, Bernd Christian Kurt

(57) **Abstract**

A method for recommending multimedia information, an electronic device, a computer program product, and a computer-readable medium are provided. The method is implemented in a computer and includes: obtaining voiceprint information of a passenger seated in a vehicle; determining an attribute category corresponding to the passenger from a plurality of attribute categories according to the voiceprint information of the passenger; selecting a multimedia information mode for recommending multimedia information to the passenger from a plurality of multimedia information modes according to the attribute category corresponding to the passenger and a correspondence between the plurality of attribute categories and the plurality of multimedia information modes; and displaying multimedia information corresponding to the selected multimedia information mode on a multimedia interaction device installed in the vehicle and associated with a seat in which the passenger is seated.

## Description

### TECHNICAL FIELD

The present disclosure relates to the technical fields of intelligent transportation and Internet of Vehicles, and more particularly, to the technical field of vehicle-mounted content recommendation, and more particularly, to a method for recommending multimedia information, an electronic device, a computer program product, and a computer-readable medium.

### BACKGROUND

In the related art, in order to improve passenger experience, some vehicles such as airplanes and high-speed trains are provided with a multimedia audio and video entertainment device in front of a seat of the passenger so that the passenger can select to use it to play some resource contents therein according to demands.

With development of traffic science and technology in tendency to being more advanced and efficient, riding time of the passenger is greatly shortened, how to provide a targeted and personalized multimedia information service for the passenger within limited time is a technical problem urgent to be solved at present.

A technical means described in this part is not necessarily a technical means envisaged or adopted before. Unless otherwise indicated, it should not be presumed that any of technical means described in this part is regarded as the prior art only depending on being included in this part. Likewise, unless otherwise indicated, the problem mentioned in this part should not be constructed as being recognized in any prior art.

### SUMMARY

According to an aspect of the present disclosure, a computer-implemented method for recommending multimedia information is provided. The method comprising:
obtaining voiceprint information of a passenger seated in a vehicle;
determining an attribute category corresponding to the passenger from a plurality of attribute categories according to the voiceprint information of the passenger;
selecting a multimedia information mode for recommending multimedia information to the passenger from a plurality of multimedia information modes according to the attribute category corresponding to the passenger and a correspondence between the plurality of attribute categories and the plurality of multimedia information modes; and
displaying multimedia information corresponding to the selected multimedia information mode on a multimedia interaction device installed in the vehicle and associated with a seat in which the passenger is seated.

According to an aspect of the present disclosure, an electronic device is provided. The electronic device comprises one or more processors and a memory storing one or more programs, wherein the one or more programs comprise instructions, which when executed by the one or more processors, cause the one or more processors to carry out the method according to the above aspect.

According to an aspect of the present disclosure, a computer program product is provided. The computer program product comprises instructions which, when the program is executed by a computer, cause the computer to carry out the method according to the above aspect.

According to an aspect of the present disclosure, a computer-readable medium is provided. The computer-readable medium comprises instructions which, when executed by a computer, cause the computer to carry out the method according to the above aspect.

### BRIEF DESCRIPTION OF THE DRAWINGS

The drawings, which exemplarily illustrate embodiments and constitute a part of the specification, together with the text description of the specification, serve to explain some implementations of the embodiments. The illustrated embodiments are for illustrative purposes only and do not limit the scope of the claims. Throughout the drawings, the same reference signs denote similar but not necessarily the same elements, in which:
Fig. 1 shows a process diagram of a method for recommending multimedia information according to some embodiments of the present disclosure;
Fig. 2 shows a process diagram of a method for recommending multimedia information according to some embodiments of the present disclosure;
Fig. 3 shows a process diagram of a method for recommending multimedia information according to some embodiments of the present disclosure;
Fig. 4 shows a schematic block diagram of an apparatus for recommending multimedia information according to some embodiments of the present disclosure; and
Fig. 5 shows a schematic block diagram of an electronic device according to some embodiments of the present disclosure.

### DETAILED DESCRIPTION

The exemplary embodiments of the present disclosure are described with reference to the drawings, which include various details of the embodiments of the present disclosure for the sake of better understanding and should be constructed as being only exemplary. Therefore, those ordinarily skilled in the art should realize that various changes and modifications can be made for the embodiments described herein without departing from the scope of the present disclosure. Similarly, for the sake of being clear and concise, description for known functions and structures is omitted in the following description.

In the present disclosure, unless otherwise stated, terms such as "first" and "second" used for describing various elements are not intended to limit a position relation, a sequence relation or a significance relation of these elements and are only used for distinguishing one component from another component. In some examples, a first element and a second element may refer to the same instance of the elements, which, under certain circumstances, may also refer to different instances on the basis of the context.

Terms used in the description of the various examples in the present disclosure only aim to describe specific examples rather than intend to make a limitation. Unless otherwise indicated clearly in the context, the quantity of the elements may be one or more without particularly limiting the quantity of the elements. Besides, a term "and/or" used in the present disclosure covers any one or all possible combinations of all listed items.

In the related art, some vehicles such as airplanes and high-speed trains are provided with a multimedia audio and video entertainment device in front of a seat of the passenger so that the passenger can select to use it to play some resource contents therein according to demands. However, after the multimedia audio and video entertainment device is started, recommended contents displayed in each seat are the same, so personalized multimedia information services more suitable for passenger demands cannot be provided for the passenger within limited riding time of the passenger.

Based on this, a method and an apparatus for recommending multimedia information, an electronic device, a computer program product, and a computer-readable medium are provided in the embodiments of the present disclosure, which can be applied to various vehicles such as the airplanes, the G-series high-speed trains, the ships, the buses and the private cars, so as to provide the passenger with a targeted and personalized multimedia information service and improve passenger experience.

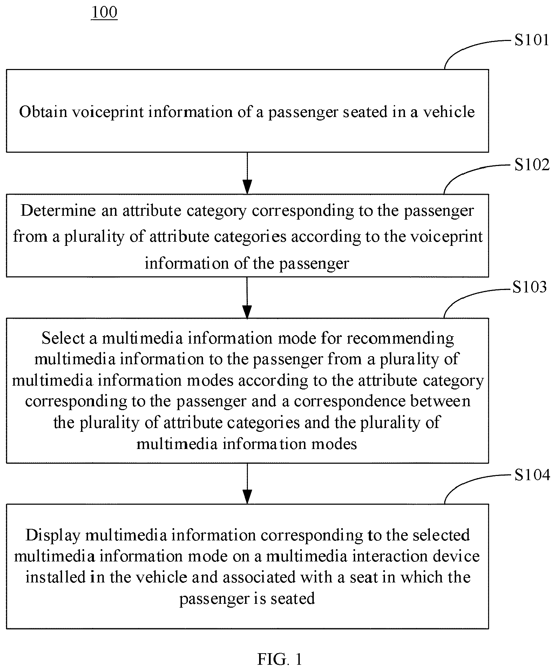

Fig. 1 shows a process diagram of a method for recommending multimedia information according to some embodiments of the present disclosure. As shown in Fig. 1, the method 100 including the following steps S101 to S104.

In step S101, voiceprint information of a passenger seated in a vehicle is obtained.

In step S102, an attribute category corresponding to the passenger is determined from a plurality of attribute categories according to the voiceprint information of the passenger.

In step S103, a multimedia information mode for recommending multimedia information to the passenger is selected from a plurality of multimedia information modes according to the attribute category corresponding to the passenger and a correspondence between the plurality of attribute categories and the plurality of multimedia information modes.

In step S104, multimedia information corresponding to the selected multimedia information mode is displayed on a multimedia interaction device installed in the vehicle and associated with a seat in which the passenger is seated.

Taking the vehicle being an airplane for example, the multimedia interaction device, for example, a multimedia audio and video entertainment device, is provided in front or upper front of each of most of passenger seats, so that the passenger can entertain or relax during the journey and enjoy a more relaxed and comfortable traveling experience.

In some embodiments of the present disclosure, the plurality of attribute categories includes at least one of a plurality of age categories or a plurality of gender categories. The plurality of multimedia information modes includes at least two of a seniors mode, a kids mode, a youth mode, a middle-aged mode, a male mode or a female mode, and each multimedia information mode is arranged corresponding to one attribute category. For example, in an embodiment, the plurality of attribute categories includes a kids category, a seniors category, a male category and a female category, and the plurality of multimedia information modes includes the kids mode, the seniors mode, the male mode and the female mode.

The multimedia information corresponding to the selected multimedia information mode may include at least one of a display interface or a multimedia content corresponding to the selected multimedia information mode. For example, the multimedia content may include animations, movies, television dramas, songs, news, online hot searches, short videos, novels and the like. The display interface refers to an interaction style displayed on a screen of the multimedia interaction device. For example, as for a child passenger, the display interface is designed to be a cartoon style, and the multimedia content recommended on the interface is the animations, children's songs and children's stories. For example, as for a female passenger, the display interface is designed to be a beautiful style, and the multimedia content recommended on the interface is beauty news, emotion dramas and entertainment news. For example, as for a male passenger, the display interface is designed to be a business style, and the multimedia content recommended on the interface is financial news, action movies and sports news. For another example, as for a senior passenger, the display interface is designed to be a Chinese style, and the multimedia content recommended on the interface is Quyi, classical movies and songs.

In the embodiments of the present disclosure, the multimedia information is recommended to the passenger on the basis of voiceprint of the passenger. The voiceprint is a sound wave frequency spectrum, which has features of being not only specific, but also relatively stable. After a person grows up, his or her voice can keep relatively stable and unchangeable for a long time. Although a speaker imitates voice and tone of another person or whispers and speaks softly, even so skillfully imitated as to be indistinguishable from the original, their voiceprints are still different. Therefore, not only can the attribute category of the passenger be judged according to the voiceprint, but also the voiceprint can be used for identity identification.

In the embodiments of the present disclosure, after the passenger is seated, the attribute category corresponding to the passenger is determined according to the voiceprint information of the passenger, then the multimedia information mode for recommending the multimedia information to the passenger is determined according to the attribute category corresponding to the passenger and the correspondence between the plurality of attribute categories and the plurality of multimedia information modes, and then the recommended multimedia information is displayed on the multimedia interaction device. In this way, the multimedia information to the passenger recommended by the multimedia interactive device is not stereotyped any more, but targeted and personalized, thereby improving the passenger's riding experience and making the journey experience better.

In some embodiments of the present disclosure, the step S101 includes: the voiceprint information carried in a voice wake-up instruction is obtained in response to receiving the voice wake-up instruction for the multimedia interaction device from the passenger. For example, when the seated passenger says the voice wake-up instruction such as "hello, XX", the multimedia interactive device can be woken up and can obtain the voiceprint information of the passenger from the voice wake-up instruction.

In some other embodiments of the present disclosure, the step S101 includes: the voiceprint information carried in voice of the passenger is obtained in response to receiving a non-voice operation wake-up instruction for the multimedia interaction device from the passenger. The seated passenger can wake up the multimedia interactive device by clicking the physical button or virtual button equipped with the multimedia interactive device, then the passenger's voice can be captured by the multimedia interactive device and the voiceprint information can be obtained from it therefrom. The content of the above-mentioned passenger's voice is not limited to a fixed wake-up word, but can be any sentence or word in the communication process.

In some further embodiments of the present disclosure, the step S101 includes: the voiceprint information carried in the voice of the passenger is obtained in real time or according to a set time interval. A voiceprint collection module of the multimedia interaction device is in a working state in real time or according to a set time interval. After the seated passenger is replaced, the voiceprint information of the new seated passenger can be acquired in time, so as to provide the new seated passenger with a personalized multimedia information recommendation service according to the steps of the above method.

In some embodiments of the present disclosure, the step S101 includes: the voiceprint information carried in voice in a set space associated with the seat in which the passenger is seated is obtained. In the embodiments, set spaces associated with different seats are different, the multimedia interaction device can capture the voiceprint information carried in the voice made by the passenger in the set space corresponding associated therewith, in this way, after the passenger is seated, as long as the passenger makes the voice, the voiceprint information carried therein can be captured by the corresponding multimedia interaction device, and the passenger does not need to manually operate an entity device.

In some other embodiments of the present disclosure, the step S101 includes: the voiceprint information carried in voice input by a voice input device associated with the seat in which the passenger is seated is obtained. In the embodiments, after the passenger is seated, the voice may be made through a special microphone or earphone containing the microphone configured for the multimedia interaction device, so that the multimedia interaction device can rapidly and accurately capture the voiceprint information carried in the voice.

In some embodiments of the present disclosure, the step S102 includes the following first sub-step and second sub-step.

In the first sub-step, a voiceprint feature of the passenger is identified from the voiceprint information of the passenger.

In the second sub-step, the attribute category corresponding to the passenger is determined from the plurality of attribute categories according to the voiceprint feature of the passenger.

The voiceprint feature includes a formant, a wavelength, a frequency, intensity, a rhythm and the like and is unrelated to a voice content. A frequency value and a trend of the formant are the most stable features and have very high specificity and the highest utilization value.

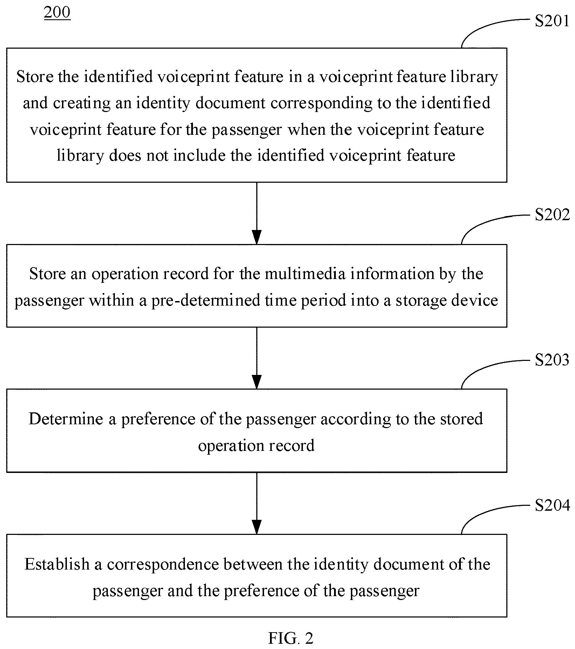

Fig. 2 shows a process diagram of a method for recommending multimedia information according to some embodiments of the present disclosure. As shown in Fig. 2, the method 200 further includes the following steps S201 to S204 on the basis of the above embodiments.

In the step S201, the identified voiceprint feature is stored in a voiceprint feature library and an identity document (ID) corresponding to the identified voiceprint feature for the passenger is created when the voiceprint feature library does not include the identified voiceprint feature.

In the step S202, an operation record for the multimedia information by the passenger within a pre-determined time period is stored into a storage device.

In the step S203, a preference of the passenger is determined according to the stored operation record.

In the step S204, a correspondence between the identity document of the passenger and the preference of the passenger is established.

As mentioned above, the voiceprint can be used for identity identification because of its features of specificity and stability. The voiceprint feature of the passenger and the identity document matched with the passenger are stored in the voiceprint feature library, so that when the passenger takes a vehicle and uses the multimedia interaction device next time, the identity document of the passenger can be identified through the voiceprint feature of the passenger, and thus the multimedia information corresponding to the preference of the passenger can be recommended to the passenger.

In some embodiments, the determining the preference of the passenger according to the stored operation record includes: an operation frequency for the multimedia information by the passenger is determined from the stored operation record; and the preference of the passenger is determined according to the operation frequency for the multimedia information by the passenger. The preference of the passenger for the multimedia information is usually reflected on the passenger's operation frequency for the multimedia information, for example, if the passenger prefers to watch a spy drama, a frequency of clicking the spy drama is usually higher than that of clicking other types of dramas.

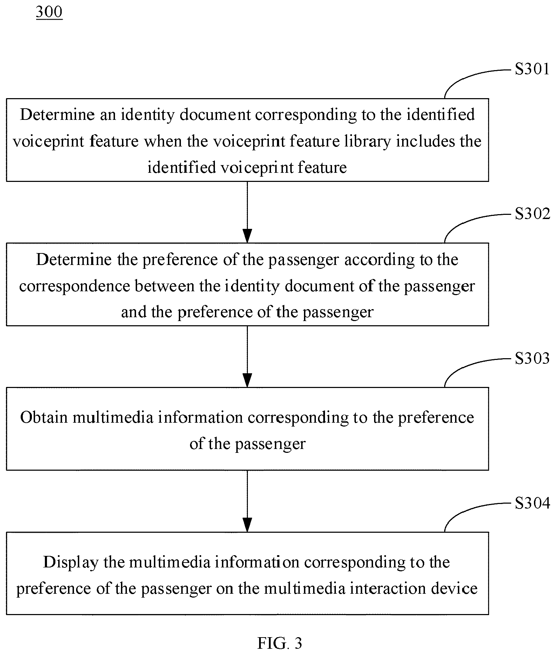

Fig. 3 shows a process diagram of a method for recommending multimedia information according to some embodiments of the present disclosure. As shown in Fig. 3, the method 300 further includes the following steps S301 to S304 on the basis of already establishing the correspondence between the identity document of the passenger and the preference of the passenger.

In the step S301, an identity document corresponding to the identified voiceprint feature is determined when the voiceprint feature library includes the identified voiceprint feature.

In the step S302, the preference of the passenger is determined according to the correspondence between the identity document of the passenger and the preference of the passenger.

In the step S303, multimedia information corresponding to the preference of the passenger is obtained.

In the step S304, the multimedia information corresponding to the preference of the passenger is displayed on the multimedia interaction device.

When the passenger uses the multimedia interaction device on the vehicle for the first time, the multimedia interaction device recommends the multimedia information corresponding to the attribute category of the passenger to the passenger with reference to the steps S101 to S104 of the above method 100. As the voiceprint feature library does not include the voiceprint feature to which the passenger corresponds, the multimedia interaction device will establish the correspondence between the identity document and the preference for the passenger when the passenger uses it for the first time.

When the passenger takes the vehicle again and uses the multimedia interaction device again, the multimedia interaction device recommends the multimedia information corresponding to the preference of the passenger to the passenger according to the established correspondence between the identity document of the passenger and the preference of the passenger. For example, a corresponding preference of a passenger with an identity document 0001 is "spy drama", a corresponding preference of a passenger with an identity document 0002 is "romantic drama", a corresponding preference of a passenger with an identity document 0003 is "Peking Opera Folk Art", and so on. When the identity document to which the voiceprint feature of the passenger corresponds is 0001, many "spy dramas" will be displayed on the multimedia interaction device as a content of the recommended multimedia information, and meanwhile the display interface may be displayed as a spy drama theme background style.

In the above embodiments of the present disclosure, the voiceprint feature library may be located in a cloud server or the multimedia interaction device, and the storage device may be located in the cloud server or the multimedia interaction device. In some embodiments, the multimedia interaction device and the cloud server perform data synchronization through a wireless network, and the voiceprint feature library and the storage device may perform data synchronization updating in real time or according to a certain time interval or when connection to the network is realized. In this way, no matter when the passenger takes the vehicle, whether the passenger takes the same vehicle and whether the passenger is seated on the same seat, the multimedia interaction device can make personalized recommendation specific to his or her preference, so that passenger experience is further improved and traveling experience is better.

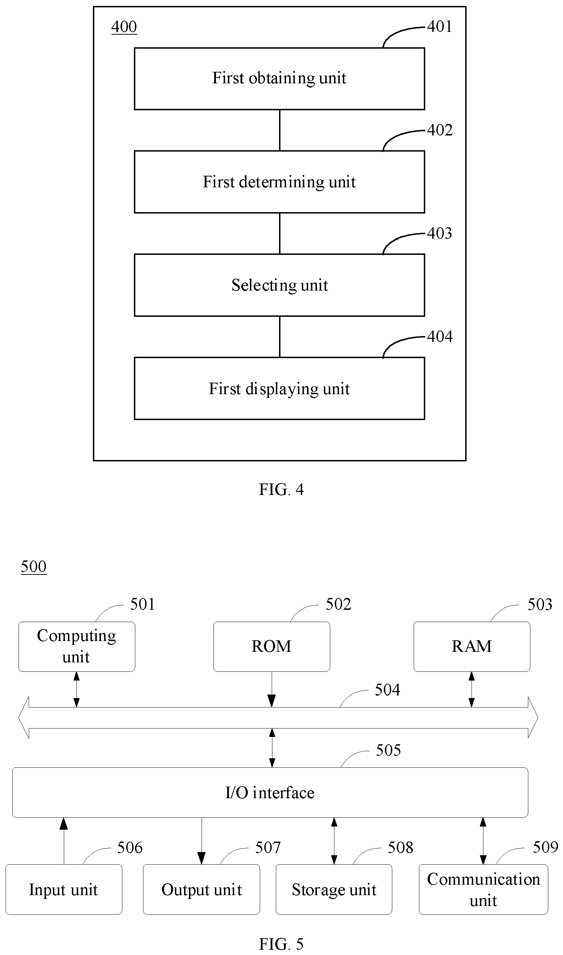

Fig. 4 shows a schematic block diagram of an apparatus for recommending multimedia information according to some embodiments of the present disclosure. As shown in Fig. 4, the apparatus 400 including:
a first obtaining unit 401, configured to obtain voiceprint information of a passenger seated in a vehicle;
a first determining unit 402, configured to determine an attribute category corresponding to the passenger from a plurality of attribute categories according to the voiceprint information of the passenger;
a selecting unit 403, configured to select a multimedia information mode for recommending multimedia information to the passenger from a plurality of multimedia information modes according to the attribute category corresponding to the passenger and a correspondence between the plurality of attribute categories and the plurality of multimedia information modes; and
a first displaying unit 404, configured to display multimedia information corresponding to the selected multimedia information mode on a multimedia interaction device installed in the vehicle and associated with a seat in which the passenger is seated.

In some embodiments, the first determining unit 402 is configured to:
identify a voiceprint feature of the passenger from the voiceprint information of the passenger; and
determine the attribute category corresponding to the passenger from the plurality of attribute categories according to the voiceprint feature of the passenger.

In some embodiments, the apparatus for recommending multimedia information further includes:
a first storage unit, configured to store the identified voiceprint feature in a voiceprint feature library and creating an identity document corresponding to the identified voiceprint feature for the passenger when the voiceprint feature library does not include the identified voiceprint feature;
a second storage unit, configured to store an operation record for the multimedia information by the passenger within a pre-determined time period into a storage device;
a second determining unit, configured to determine a preference of the passenger according to the stored operation record; and
a relation establishing unit, configured to establish a correspondence between the identity document of the passenger and the preference of the passenger.

In some embodiments, the apparatus for recommending multimedia information further includes:
a third determining unit, configured to determine the identity document corresponding to the identified voiceprint feature when the voiceprint feature library includes the identified voiceprint feature;
a fourth determining unit, configured to determine the preference of the passenger according to the correspondence between the identity document of the passenger and the preference of the passenger;
a second obtaining unit, configured to obtain multimedia information corresponding to the preference of the passenger; and
a second displaying unit, configured to display the multimedia information corresponding to the preference of the passenger on the multimedia interaction device.

In some embodiments, the second determining unit is configured to:
determine an operation frequency for the multimedia information by the passenger from the stored operation record; and
determine the preference of the passenger according to the operation frequency for the multimedia information by the passenger.

In some embodiments, the first obtaining unit is configured to:
obtain the voiceprint information carried in a voice wake-up instruction in response to receiving the voice wake-up instruction for the multimedia interaction device from the passenger; or
obtain the voiceprint information carried in voice of the passenger in response to receiving a non-voice operation wake-up instruction for the multimedia interaction device from the passenger; or
obtain the voiceprint information carried in voice of the passenger in real time or according to a set time interval.

In some embodiments, the first obtaining unit is configured to:
obtain the voiceprint information carried in voice in a set space associated with the seat in which the passenger is seated, or
obtain the voiceprint information carried in voice input by a voice input device associated with the seat in which the passenger is seated.

As analyzed above, application of the apparatus for recommending multimedia information of the above embodiment of the present disclosure enables the multimedia information recommended by the multimedia interaction device to the passenger to be not stereotyped any more, targeted and personalized recommendation is made according to the attribute category to which the passenger corresponds, so that passenger experience can be improved and traveling experience is better.

Some embodiments of the present disclosure further provide an electronic device. The electronic device comprises one or more processors and a memory storing one or more programs, wherein the one or more programs comprise instructions, which when executed by the one or more processors, cause the one or more processors to carry out the above method.

Fig. 5 shows a schematic block diagram of an electronic device 500 of the present disclosure applied to a server or a client, which is an example applicable to hardware devices in all aspects of the present disclosure. The electronic device 500 aims to represent digital-electronic computer devices in various forms, such as a laptop computer, a desktop computer, a workbench, a personal digital assistant, a server, a blade server, a mainframe computer and other suitable computers. The electronic device may further represent movable apparatuses in various forms, such as the personal digital assistant, a cell phone, a smartphone, a wearable device and other similar computing apparatuses. Components and their connections, relations and functions shown herein are only used as examples rather than intend to limit implementation of the present disclosure described and/or required herein.

As shown in Fig. 5, the electronic device 500 includes a computing unit 501, which can execute various appropriate actions and processing according to a computer program stored in a read-only memory (ROM) 502 or a computer program loaded to a random access memory (RAM) 503 from a storage unit 508. In the RAM 503, various programs and data required for operation of the electronic device 500 may be further stored. The computing unit 501, the ROM 502 and the RAM 503 are mutually connected through a bus 504. An input/output (I/O) interface 505 is also connected to the bus 504.

A plurality of components in the electronic device 500 are connected to the I/O interface 505, including: an input unit 506, an output unit 507, the storage unit 508 and a communication unit 509. The input unit 506 may be any type of device capable of inputting information to the electronic device 500. The input unit 506 can receive input number or character information and generate key signal input related to a user apparatus and/or function control of the electronic device and may include but is not limited to a mouse, a keyboard, a touch screen, a trackpad, a trackball, a joystick, a microphone and/or a remote-control unit. The output unit 507 may be any type of device capable of displaying information and may include but is not limited to a display, a speaker, a video/audio output terminal, a vibrator and/or a printer. The storage unit 508 may include but is not limited to a magnetic disk and a compact disc. The communication unit 509 may allow the electronic device 500 to exchange information/data with other devices through a computer network, such as Internet, and/or various telecommunication networks and may include but is not limited to a modem, a network card, an infrared communication device, a wireless communication transceiver and/or a chipset, for example, a Bluetooth TM device, a 802.11 device, a WiFi device, a WiMax device, a cellular communication device and/or similar items.

The computing unit 501 may be various general-purpose and/or special-purpose processing components with processing and computing capacity. Some examples of the computing unit 501 may include but are not limited to a central processing unit (CPU), a graphics processing unit (GPU), various special-purpose artificial intelligence (AI) computing chips, various computing units for running a machine learning model algorithm, a digital signal processor (DSP), and any appropriate processor, controller, microcontroller and the like. The computing unit 501 executes each method and processing described above, for example, the method for recommending multimedia information. For example, in some embodiments, the method for recommending multimedia information may be realized as a computer software program, which is tangibly contained in a machine readable medium, for example, the storage unit 508. In some embodiments, a part of or all of a computer program may be loaded and/or installed onto the electronic device 500 via the ROM 502 and/or the communication unit 509. When the computer program is loaded to the RAM 503 and executed by the computing unit 501, one or more steps of the method for recommending multimedia information described above can be executed. Alternatively, in other embodiments, the computing unit 501 may be configured to execute the method for recommending multimedia information in any other appropriate mode (for example, by means of firmware).

Some embodiments of the present disclosure further provide a computer program product. The computer program product comprises instructions which, when the program is executed by a computer, cause the computer to carry out the method above.

Some embodiments of the present disclosure further provide a computer-readable medium. The computer-readable medium comprises instructions which, when executed by a computer, cause the computer to carry out the method above.

Various implementations of the systems and technologies described above in this disclosure may be implemented in a digital electronic circuit system, an integrated circuit system, a field programmable gate array (FPGA), an application specific integrated circuit (ASIC), an application specific standard part (ASSP), a system on chip (SOC), a load programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium such as a non-transitory computer readable storage medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally away from each other and interact usually through a communication network. A relation between the client and the server is generated by running the computer program with a mutual client-server relation on a corresponding computer.

It should be understood that steps can be reranked, added or deleted by using various forms of flows shown above. For example, all the steps recorded in the present disclosure can be executed in parallel, or in sequence or in different orders, which is not limited herein as long as a desired result of the technical solutions disclosed by the present disclosure can be realized.

Though the embodiments or the examples of the present disclosure are already described with reference to the drawings, it should be understood that the above method, system or device is only an exemplary embodiment or example, and the scope of present disclosure is not limited by these embodiments or examples but limited only by the scope of the authorized claims and their equivalents. Various elements in the embodiments or the examples may be omitted or replaced by their equivalent elements. Besides, all the steps may be executed in sequence different from a sequence described in the present disclosure. Furthermore, various elements in the embodiments or the examples may be combined in various modes. What counts is that with technology evolution, many elements described here can be replaced by equivalent elements appearing after the present disclosure.

## Claims

1. A computer-implemented method for recommending multimedia information, the method comprising:
obtaining voiceprint information of a passenger seated in a vehicle;
determining an attribute category corresponding to the passenger from a plurality of attribute categories according to the voiceprint information of the passenger;
selecting a multimedia information mode for recommending multimedia information to the passenger from a plurality of multimedia information modes according to the attribute category corresponding to the passenger and a correspondence between the plurality of attribute categories and the plurality of multimedia information modes; and
displaying multimedia information corresponding to the selected multimedia information mode on a multimedia interaction device installed in the vehicle and associated with a seat in which the passenger is seated.

2. The method according to claim 1, wherein the determining the attribute category corresponding to the passenger comprises:
identifying a voiceprint feature of the passenger from the voiceprint information of the passenger; and
determining the attribute category corresponding to the passenger from the plurality of attribute categories according to the voiceprint feature of the passenger.

3. The method according to claim 2, further comprising:
storing the identified voiceprint feature in a voiceprint feature library and creating an identity document corresponding to the identified voiceprint feature for the passenger when the voiceprint feature library does not include the identified voiceprint feature;
storing an operation record for the multimedia information by the passenger within a pre-determined time period into a storage device;
determining a preference of the passenger according to the stored operation record; and
establishing a correspondence between the identity document of the passenger and the preference of the passenger.

4. The method according to claim 3, further comprising:
determining an identity document corresponding to the identified voiceprint feature when the voiceprint feature library includes the identified voiceprint feature;
determining the preference of the passenger according to the correspondence between the identity document of the passenger and the preference of the passenger;
obtaining multimedia information corresponding to the preference of the passenger; and
displaying the multimedia information corresponding to the preference of the passenger on the multimedia interaction device.

5. The method according to claim 3, wherein the determining the preference of the passenger according to the stored operation record comprises:
determining an operation frequency for the multimedia information by the passenger from the stored operation record; and
determining the preference of the passenger according to the operation frequency for the multimedia information by the passenger.

6. The method according to claim 5, wherein the voiceprint feature library is located in a cloud server or the multimedia interaction device, and wherein the storage device is located in the cloud server or the multimedia interaction device.

7. The method according to claim 1, wherein the plurality of attribute categories comprise a plurality of age categories and/or at least two gender categories, and wherein the plurality of multimedia information modes comprise at least two of an seniors Mode, a kids mode, a youth mode, a middle-aged mode, a male mode and a female mode.

8. The method according to claim 1, wherein the multimedia information corresponding to the selected multimedia information mode comprises: a display interface or a multimedia content corresponding to the selected multimedia information mode.

9. The method according to any one of claims 1 to 8, wherein the obtaining the voiceprint information of the passenger seated in the vehicle includes:
obtaining the voiceprint information carried in a voice wake-up instruction in response to receiving the voice wake-up instruction for the multimedia interaction device from the passenger; or
obtaining the voiceprint information carried in voice of the passenger in response to receiving a non-voice operation wake-up instruction for the multimedia interaction device from the passenger; or
obtaining the voiceprint information carried in voice of the passenger in real time or according to a set time interval.

10. The method according to any one of claims 1 to 8, wherein the obtaining the voiceprint information of the passenger seated in the vehicle comprises:
obtaining the voiceprint information carried in voice in a set space associated with the seat in which the passenger is seated, or
obtaining the voiceprint information carried in voice input by a voice input device associated with the seat in which the passenger is seated.

11. An electronic device, comprising:
one or more processors; and
a memory storing one or more programs, wherein the one or more programs comprise instructions, which when executed by the one or more processors, cause the one or more processors to carry out the method according to any one of claims 1 to 10.

12. A computer program product, comprising instructions which, when the program is executed by a computer, cause the computer to carry out the method according to any one of claims 1 to 10.

13. The computer program product of claim 12, stored on a computer readable recording medium.

14. A computer-readable medium comprising instructions which, when executed by a computer, cause the computer to carry out the method according to any one of claims 1 to 10.

15. A vehicle, comprising the electronic device according to claim 11.
